# EUROPEAN PATENT APPLICATION

(11) **EP 1 771 023 A1**
(43) Date of publication of application: **04.04.2007**
(21) Application number: 05425678.9
(22) Date of filing: 29.09.2005
(51) Int. Cl.: H04Q 7/38

(54) **Soft preemption based on allocation/ retention priority information in a GPRS/UMTS Network**

(71) Applicant: Siemens S.p.A., 20126 Milano (IT)
(72) Inventor: Masseroni, Carlo, 20017 Rho (MI) (IT); Toffetti, Massimo, 20146 Biassono (IT)
(74) Representative: Giustini, Delio

(57) **Abstract**

A method for assigning priorities of services to users in a communication network.

In the exemplary embodiment of the invention described herein, the priority of services requested by the users such as mobile users, is assigned according to an Allocation Retention Priority (ARP) Information Element (IE) as defined in 48.018 3GPP GERAN Technical Specification. The arrangement described herein allows managing radio resource congestion without any long and complex connection reconfigurations from the Radio Resource Manager point of view.

In a preferred embodiment of the invention the Allocation Retention Priority (ARP) Information Element (IE) includes information items such as:
- a Pre-emption Capability Indicator (PCI), indicative of whether the corresponding service may or may not trigger pre-emption;
- a Pre-emption Vulnerability Indicator (PVI), indicative of whether the corresponding service may be pre-empted or shall not be pre-empted; and
- a priority level assigned to the service.

## Description

### Field of the invention

The invention relates to techniques for managing radio resources in communication networks. Specifically, the invention was developed with attention primarily paid to its possible use in managing radio resource congestion conditions that may arise in GPRS/EGPRS networks when an incoming service has to be allocated.

### Description of the related art

Present-day EGPRS/GPRS networks do not generally implement any mechanisms to manage radio resource congestion other than by either rejecting or queueing any incoming request for service that cannot be allocated due to radio congestion.

General information on this conventional approach can be found e.g. in the following 3GPP (3rd Generation Partnership Project) documents:
- 44.018 - 3rd Generation Partnership Project; Technical Specification Group GSM/EDGE Radio Access Network; Mobile radio interface layer 3 specification; Radio Resource Control (RRC) protocol;
- 43.064 - 3rd Generation Partnership Project; Technical Specification Group GSM/EDGE Radio Access Network; General Packet Radio Service (GPRS); Overall description of the GPRS radio interface; Stage 2 (Release 6).

### Object and summary of the invention

Such a conventional approach fails to provide a truly satisfactory response to the increasing need of meeting as closely as possible the users' requirements in terms of Quality of Service (QoS). This especially if one takes into account that services requested by users of a communication network do in fact have different requirements in terms of e.g. time (real time v. best effort) and, more generally, priority.

The need is therefore felt for arrangements that may overcome the intrinsic drawback and limitations of the conventional approach discussed in the foregoing.

The object of the invention is thus to provide a fully satisfactory response to those needs.

According to the present invention, that object is achieved by means of a method having the features set forth in the claims that follow. The invention also relates to a corresponding system, as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein is thus a method of assigning priorities of service to users in a communication network, the method including the step of assigning said priorities on the basis of an Allocation Retention Priority (ARP) Information Element (IE).

In the exemplary embodiment of the invention described herein, the priority of services requested by the users such as mobile Users, is assigned according to an Allocation Retention Priority (ARP) Information Element (IE) as defined in 48.018 3GPP GERAN Technical Specification. The arrangement described herein allows managing radio resource congestion without any long and complex connection reconfigurations from the Radio Resource Manager point of view.

In a preferred embodiment of the invention the Allocation Retention Priority (ARP) Information Element (IE) includes information items such as:
- a Pre-emption Capability Indicator (PCI), indicative of whether the corresponding service may or may not trigger pre-emption;
- a Pre-emption Vulnerability Indicator (PVI), indicative of whether the corresponding service may be pre-empted or shall not be pre-empted; and
- a priority level assigned to the service.

In a particularly preferred embodiment of the invention, the Allocation Retention Priority (ARP) Information Element (IE) includes an information item indicative of a priority level assigned to the corresponding service, and, in the presence of a congestion situation, the services having a given priority level in the Allocation Retention Priority Information Element (ARP-IE) are assigned communication resources taken from services indicated by the Pre-emption Vulnerability Indicator (PVI) as services that may be pre-empted and having a priority level lower than said given priority level.

The main advantages provided by the invention are:
- fairness: all the lower priority services share the "burden" of an incoming high priority service and this only on those channels where the new incoming service allocation shall be set; in other words, a high priority service, if admitted in a congested network over a given channel (e.g. PDCH) allocation, will "take" resources not just from a single lower priority service, but rather from all the lower priority services;
- the lower priority services are not de-allocated; they can receive all their capacity very quickly when congestion is passed on a congested channel;
- the impact on the system when the algorithm is run is reduced in comparison with a standard de-allocation strategy; and
- the invention ensures a fast and efficient reaction to the variation in the Allocation Retention Priority (ARP) parameters: the Radio Resource Manager (RRM) is not required to perform long and complex reconfigurations.

### Brief description of the annexed drawings

The invention will now be described, by way of example only, with reference to the enclosed figures of drawing, wherein:
- Figure 1 is a general schematic representation of a GPRS System Architecture;
- Figure 2 and Figure 3 are exemplary of management for two applications in 'single' TBF case and mTBF case; and
- Figure 4 is a flow chart exemplary of a soft-pre-emption algorithm adapted to be used in the arrangement described herein.

### Detailed description of referred embodiments of the invention

By way of introduction to the detailed description of exemplary embodiments of the invention a synopsis is provided below of the meaning of a number of acronyms and abbreviations as used throughout this description:
- ARP =: Allocation Retention Priority
- BSC =: Base Station Controller
- BSS =: Base Station System
- BSSGP =: Base Station System GPRS Protocol
- EGPRS =: Enhanced GPRS
- CAA =: Channel Allocation Algorithm
- GERAN =: GSM/EDGE Radio Access Network
- GGSN =: Gateway GPRS Support Node
- GPRS =: General Packet Radio Service
- GSM =: Global System for Mobile communications
- HLR =: Home Location Register

- IE =: Information Element
- IP =: Internet Protocol
- LL-PDU =: LLC PDU
- LLC =: Logical Link Control
- MAC =: Medium Access Control
- MS =: Mobile Station
- PCU =: Packet Control Unit
- PDCH =: Packet Data Channel
- PDP =: Racket Data Protocol
- PDU =: Protocol Data Unit
- PFC =: Packet Flow Context
- QoS =: Quality of Service
- RLC =: Radio Link Control
- SGSN =: Serving GPRS Support Node
- SNDC =: Sub Network Dependent Convergence
- SNDCP =: Sub Network Dependent Convergence Protocol
- TBF =: Temporary Block Flow
- TCP =: Transmission Control Protocol
- TFI =: Temporary Flow Identifier

Additionally, for the purposes of the present description, the following symbols/designations will apply:
Gb = Interface between an SGSN and a BSS.
Gi = Reference point between GPRS and a packet data network.
Gn = Interface between two GSNs within the same PLMN.
Um = Interface between the mobile station (MS) and the A/Gb mode network. Specifically, the Um interface is the MS-to-network interface for providing GPRS services over the radio to the MS.

Additionally, those of skill in the art will appreciate that, while the exemplary description of an embodiment of the invention provided herein is primarily based on GPRS terminology, the invention will identically apply to all those mobile networks (e.g. irrespective of whether 2G or 3G) that include elements or equipment performing the same functions or equivalent functions to those described herein.

In brief, the arrangement described herein implements a method, based on soft-preemption, in order to manage radio resource congestion in GPRS/EGPRS Network, when an incoming service has to be allocated. The priority of services as requested by the by Mobile Users is assigned according to an Allocation Retention Priority (ARP) Information Element (IE) defined in 48.018 3GPP GERAN Technical Specification.

Essentially, operation of the arrangement described herein involves two functional elements implemented in a Base Station System (BSS), namely:
- the Channel Allocation Algorithm, i.e. the entity responsible for Packet Data Channel (PDCH) assignment to the mobile station requesting the service; and
- the Scheduler, namely the entity responsible for the assignment of the basic radio resource (Radio Block) to the service.

The Allocation/Retention Priority (ARP) feature considered herein is conceived in order to manage (E)GPRS calls in congestion situations according to the user profile. ARP procedures apply only for (E)GPRS calls. ARP enables the operator to ensure sufficient capacity, even in situations with congestion, for some users/bearers, specifically for "premium" users, who are expected to provide a higher revenue for the operator than other users, and, more generally, for those users who, according to their profile, are acknowledged higher priorities over other users in the network.

Implementing an Allocation/Retention Priority (ARP) scheme involves supporting Packet Flow Management, which is a feature of systems complying with the document - 44.018 - 3rd Generation Partnership Project; Technical Specification Group GSM/EDGE Radio Access Network; Mobile radio interface layer 3 specification; Radio Resource Control (RRC) protocol - already cited in the introductory portion of the description.

An ARP Information Element (ARP-IE) can in fact be included in the CREATE-BSS-PFC Message generated by the SGSN. Such an ARP-IE may be comprised of the following fields:
- Pre-emption Capability Indicator (PCI):
   "may trigger pre-emption" (1)
   "shall not trigger pre-emption " (0)
- Pre-emption Vulnerability Indicator (PVI):
   "may be pre-empted" (1)
   "shall not be pre-empted" (0)
- Priority Level:
   1(highest) to 3 (lowest) can be set by SGSN.

It will be appreciated that for each PDP context (Service), the SGSN receives from the HLR an Allocation/Retention Priority value which can take the values 1 or 2 or 3 in case of the GERAN Network. These values are mapped in the field "priority" of the "Allocation/Retention Priority" IE of the CREATE-BSS-PFC PDU.

When the ARP-IE is not available, some strategies can be adopted to provide ARP-IE field values. Typical cases where an ARP-IE is not available are:
- a pre-defined PFI (Packet Flow Identifier - i.e. Best Effort, Signaling, SMS, TOM8): the CREATE-BSS-PFC Message is not foreseen according to the standard; the Mobile Operators could configure the profile (VPI, VCI, Priority) for each type of Pre-defined PFI;
- a TBF (Temporary Block Flow) has to be established for a not Pre-defined PFI and a CREATE-BSS-PFC Message has not been received yet; the BSC sends a DOWNLOAD-BSS-PFC Message, until the CREATE-BSS-PFC Message is received, the request could be managed with Pre-defined PFI Best Effort values;
- the CREATE-BSS-PFC Message does not contain any ARP-IE (optional IE); this case is foreseen by 3GPP TS 48.018, the following field values are provided: PCI=0 ("shall not trigger pre-emption "); PVI=1 ("may be pre-emptable"), Priority Level = lowest (3); and
- Pre-Release 99 MS: MS could be managed with Pre-defined PFI Best Effort values.

The following is a detailed illustration of the main Radio Resource Manager (RRM) aspects that support the approach described herein for managing congestion in GPRS/EGPRS networks.

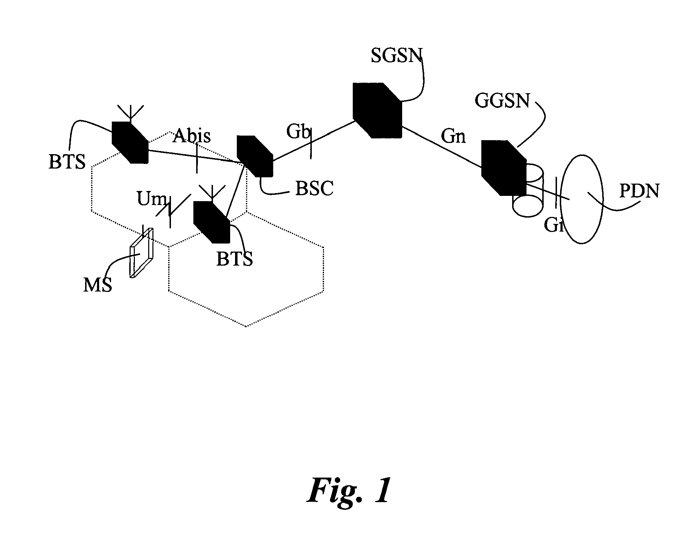

As indicated, Figure 1 is a general schematic representation of a GPRS System Architecture, where the following elements are illustrated:
- BSC: Base Station Controller
- BTS: Base Transceiver Station
- BSS: Base Station System, BSC plus BTS functionalities
- MS: Mobile Station
- SGSN : Serving GPRS Support Node
- GGSN : Gateway GPRS support node
- PDN: Packet Data Network
- Um : Radio Interface between BTS and MS
- Gb: Interface between BSC and SGSN
- Gn: Interface between SGSN and GGSN
- Gi: Interface between GSGN and PDN

This general architecture is well known to those of skill in the art, thus making it unnecessary to provide a more detailed description herein.

Starting from GPRS Release 99, the SGSN (Serving GPRS Support Node) is able to provide the BSS (Base Station System) with information related to the ongoing user data transmission in terms of a BSS PFC (Packet Flow Context). This information is used to describe the QoS (Quality of Service) characteristics for data transmission for each mobile user and is identified in terms of their PFI (Packet Flow Identity).

Four predefined Packet Flow Contexts are used for Best Effort, SMS (Short Message Service) transmission, TOM (Tunnelling of Message) and Signalling, which do not require any form of negotiation between the SGSN and the BSS. QoS Service information as provided by the Packet Flow Context is also used to establish the connection on the Um radio interface, defined as Temporary Block Flow (TBF), to serve the service data transfer belonging to the specific PFC with the required Quality of Service. A Temporary Block Flow is a logical connection between the Mobile Station (MS) MAC and Base Station System (BSS) MAC to support the unidirectional transfer of LLC (Logical Link Control) PDU (Protocol Data Unit) on packet data physical channels. A TBF is temporary and is maintained only for the duration of the data transfer, i.e. until there are no more RLC (Radio Link Control) / MAC (Medium Access Control) blocks to be transmitted.

TBF is a unidirectional concept (uplink and downlink TBF are respectively required to transfer data from MS to BSS and from BSS to MS) and consists of allocation of one or more PDCH (i.e. Time Slots). One (uplink or downlink) PDCH can accommodate one or more TBFs (TBF Multiplexing) belonging to different Mobile Stations.

The possibility exists of supporting multiple services by mapping all application data streams onto one TBF or by releasing a TBF and setting up a new one each time data from a different application needs to be transmitted (MS belonging to Pre-Release 6). Alternatively, if mobile stations can support more than one TBF per direction (multiple TBF (mTBF) feature), several TBFs are established in each direction at the same time for the same MS to support each active services (and therefore active PFCs). (MS belonging to Release 6).

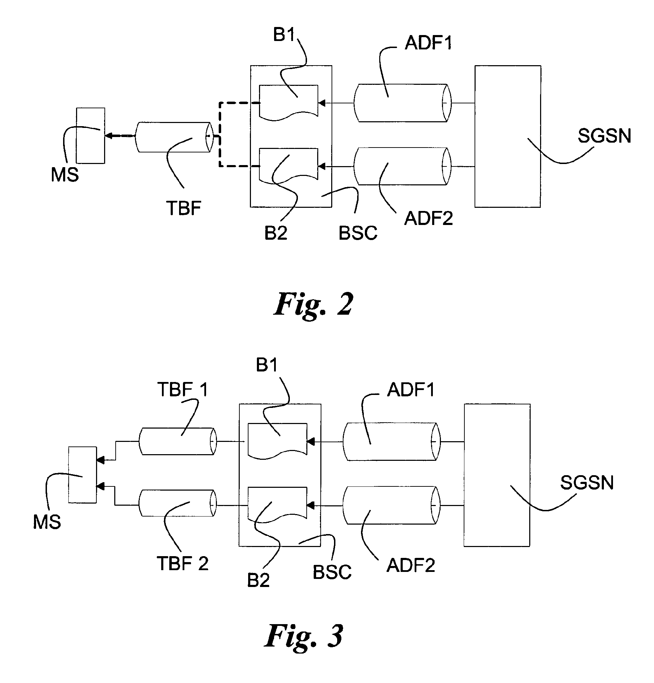

The functional block diagram of Figure 2 illustrates the process of mapping several PFCs (service) onto one single TBF (example: downlink direction) .

Specifically, figure 2 shows two application data flows ADF1 and ADF2 from the Serving GPRS Support Node SGSN being forwarded to two respective buffers B1 and B2 in the Base Station Controller BSC. From the buffers B1 and B2 the data flows ADF1 and ADF2 arrive at the Temporary Block Flow TBF to be forwarded on to the Mobile Station MS.

Figure 3 is illustrative of the possibility of mapping several PFCs (service) onto multiple TBFs (example: downlink direction).

Specifically, figure 3 shows again two application data flows ADF1 and ADF2 from the Serving GPRS Support Node SGSN being forwarded to two respective buffers B1 and B2 in the Base Station Controller BSC. From the buffers B1 and B2, the data flows ADF1 and ADF2 arrive at two respective Temporary Block Flows TBF1 and TBF2 to be forwarded on to the Mobile Station MS.

Irrespective of the TBF Strategy (single/mTBF), used, the Radio Resource Manager RRM provides a minimum amount of radio resources (i.e. Radio Blocks) in the unit of time dependently on QoS Class associated to the PFC (service). When the Radio Resource Manager RRM is not able to provide minimum radio resources to a new incoming service, a congestion algorithm shall be run.

The Radio Resource Manager RRM can be subdivided into two functional elements, namely:
- a Channel Allocation Algorithm (CAA), that is the entity responsible for Packet Data Channel (PDCH) assignment to the mobile station requiring the service data transfer, and
- a Scheduler (SCH), that is the entity responsible for the assignment of the basic radio resource (i.e. Radio Block) to the service.

Both elements (CAA and SCH) become involved when a connection (TBF) has to be established to transfer data for a service (PFC). The CAA tries to assign the appropriate PDCH set according to the PFC (service) QoS Class. The SCH assigns the Radio Blocks, in the time unit, n each assigned PDCH to the service. For instance, each PDCH belonging to a transceiver (TRX) shall provide 50 Radio Blocks per second, since each Radio Block is 20ms long.

If a minimum amount of radio resources (Radio Blocks) have to be guaranteed in the time unit for each service according to its QoS Class, then the number of services (TBF/PFC) that can be multiplexed on a PDCH/cell is limited. A new incoming TBF/PFC will thus be allocated (in a TRX) if the CAA can determine an allocation (a set of PDCH) that can provide at least the minimum number of radio blocks according to the service (PFC) QoS Class for each assigned PDCH. When the Channel Allocation Algorithm is not able to provide, at least the minimum guaranteed radio resources to a new incoming service (PFC), a congestion event is triggered by incoming service (TBF/PFC): an algorithm to manage the congestion can be run.

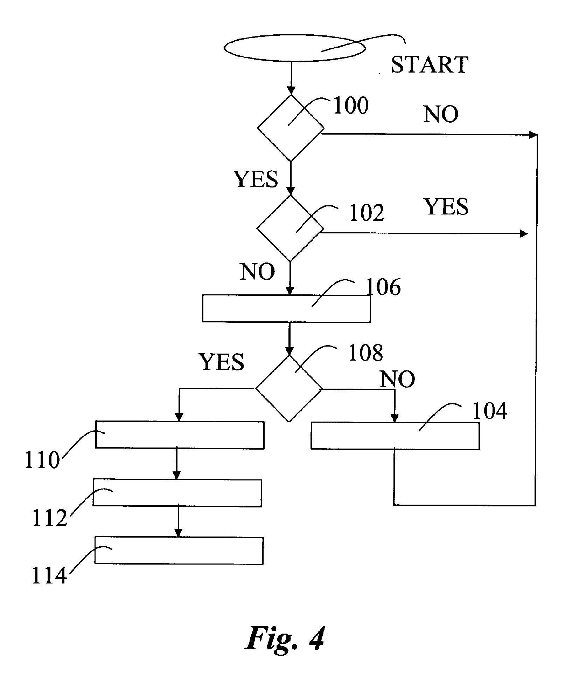

A practical implementation of the congestion procedure, designated ARP Soft-Pre-emption Algorithm, will now be described in connection with the flow chart of figure 4. This procedure is based on a modified scheduling strategy, called soft-pre-emption, and exploits the Allocation Retention Priority Information Element (ARP-IE) associated to the incoming service: service data flow with higher priority shall get radio capacity, in term of radio blocks per unit of time, from services with lower priority. The procedure relies primarily on Scheduler supports: radio resource (i.e. radio blocks per time unit and PDCH) assigned to pre-empted service(s) is(are) re-scaled/reduced only until congestion situation is "over". The PDCH congestion situation is considered to be "over" when the overall allocated capacity on the PDCH is less than or, equal to, the maximum PDCH capacity per unit of time.

When the ARP Soft-Pre-emption Algorithm is run, starting from a START step, in two steps 100 and 102 the priority capability indicator (PCI) and priority level for the PFC are checked.

If the service is found to be unable to pre-empt (i.e. negative outcome of the step 100 or, alternatively, positive outcome of the step 100 together with a positive outcome of the step 102) the incoming service shall not be allocated, and will thus be rejected (step 104).

Otherwise (positive outcome of the step 100 together with a negative outcome of the step 102), the Channel Allocation Algorithm for the congestion (denoted by CAA ARR) is run in a step 106. The Channel Allocation Algorithm for congestion is responsible for determining, if any, the set of possible allocations for service in case of congestion.

The following strategy is implemented.

The algorithm must know - for each PDCH belonging to each transmitter (TRX) in the cell - how much capacity (Radio Block) can be recovered from each pre-emption priority level.

The following table is exemplary of a capacity data structure for a TRX.

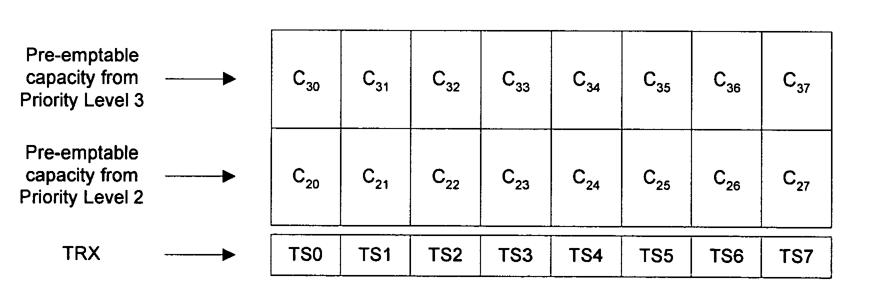

For each PDCHᵢ (i=0-7), for each priority level p (p=2,3), the total amount of pre-emptable capacity is indicated for each priority level: Cᵢₚ. This structure is defined both for downlink direction and for uplink direction. Preferably, in an optimization of the procedure, PFCs with Pre-emption Vulnerability Indication (PVI) set to 1 and Priority Level equal to 1 are not traced because they cannot be pre-empted.

If one direction is considered for the sake of clarity, the TBF, which should transfer service data belonging to the PFC with priority level P, could be allocated on a PDCH set, if and only if, for each PDCHₓ belonging to the PDCH set, the needed capacity, C_{PFC} for the service on the PDCHₓ, can be recovered from the sum of Cₚₓ, where Cₚₓ is equal to:
C₃ₓ and C₂ₓ if P=1
C₃ₓ if P=2.

All possible allocations (PDCH set) for the MS shall be generated for each TRX.

The allocation to be assigned to the MS is then selected by applying the criterion of preferring the allocation with the highest impacts on the highest priority level.

As an example, the case will be considered of a service/PFC with PCI=1 and a priority level equal to 1. The required minimum capacity is equal to 8 radio blocks per PDCH. Assuming that the service/PFC requires a single PDCH configuration and two allocations have been generated by the ARP Soft-Pre-emption Algorithm, then:
- the former has been created on PDCH_{y} by obtaining the capacity needed from C_{3y} only, and
- the latter has been created on PDCH_{z} by by obtaining the capacity needed from C_{3z} and C_{2z}.

According to the principles discussed in the foregoing, the first allocation is the preferred one:
it has no impact on PFCs with priority level 2, and all impacts are on the lowest priority PFCs (priority level 3).

When capacity is transferred to the highest priority PFC, the related counter impacted Cₚₓ shall be updated (reduced). The Scheduler parameters, i.e. Radio Blocks Counters per PDCH per TBF/PFC, for all pre-empted services (TBF/PFC), will have to be updated, for each PDCH, to perform soft-pre-emption: the Scheduler parameters are reduced proportionally to the "stolen" capacity from the incoming service.

The Channel Allocation Algorithm for congestion (CAA ARP), as described above, can provide an allocation over-exceeding the maximum capacity for the unit of time for the PDCH, i.e. on congested PDCH (where the overall allocated capacity exceeds the maximum capacity for the unit of time).

In a step 108, a check is made as to whether any allocation can be accomplished. If the check yields a negative outcome, the system evolves towards the rejection step 104.

If the check of the step 108 yields a positive outcome, the system evolves towards a step 110, where the scheduler parameters are updated in order to maintain the overall assigned capacity per PDCH equal to the maximum PDCH capacity per time unit. In a step 112 the pre-emptable capacity counters (Cₚₓ) are updated correspondingly, and the system evolves towards a step 114 indicative of the fact that the incoming PFC/TBF has been allocated.

As indicated, the arrangement described herein is "fair" in that all the lower priority services (TBF/PFCs) share the "burden" of the incoming high priority service and this only over PDCH(s) where the new incoming service allocation shall be set.

The lower priority services are not de-allocated; they can receive all their capacity very quickly when the congestion situation on the congested PDCH is over. The impact on the system when the algorithm is run is reduces in comparison to TBF de-allocation strategies. A fast and efficient reaction to the variation of ARP parameters is ensured: no long and complex reconfigurations have to be performed by the RRM.

In brief, the invention is based on the principle that, when a congestion event is experimented for an incoming service, a procedure to manage the congestion situation is applied by using an ARP Information Element to perform service soft-pre-emption by the scheduler.

Without prejudice to the underlying principle of the invention, the details and the embodiments may vary, even appreciably, with respect to what has been described by way of example only, without departing from the scope of the invention as defined by the annexed claims.

## Claims

1. A method of assigning priorities of service to users in a communication network, the method including the step of assigning said priorities on the basis of an Allocation Retention Priority (ARP) Information Element (IE).

2. The method of claim 1, **characterised in that** it includes the step of including in said Allocation Retention Priority (ARP) Information Element (IE) information items selected out of the group consisting of:
- a Pre-emption Capability Indicator (PCI), indicative of whether the corresponding service may or may not trigger pre-emption;
- a Pre-emption Vulnerability Indicator (PVI), indicative of whether the corresponding service may be pre-empted or shall not be pre-empted; and
- a priority level assigned to said service.

3. The method of either of claims 1 or 2,
**characterised in that** it includes the steps of:
- including in said Allocation Retention Priority (ARP) Information Element (IE) an information item indicative of a priority level assigned to the corresponding service;
- transferring to services having a given priority level in said Allocation Retention Priority Information Element (ARP-IE) communication resources taken from services indicated by said Pre-emption Vulnerability Indicator (PVI) as services that may be pre-empted and having a priority level lower than said given priority level.

4. The method of claim 3, **characterised in that** it includes the steps of.
- detecting a congestion situation in said network, and
- transferring, in the presence of said congestion situation, said transmission resources to said services having a given priority level in said Allocation Retention Priority Information Element (ARP-IE).

5. The method of claim 5, **characterised in that** said step of transferring is performed only as long as said congestion situation exists.

6. The method of any of the previous claims, **characterised in that** it includes the step of assigning to said services communication channel resources (PDCH) in said network on the basis of:
- a resource Allocation Algorithm responsible for channel resource (PDCH) assignment to a terminal requesting the service, and
- scheduling assignment of the channel resource to the service.

7. The method of claims 5 and 6, **characterised in that** it includes the step of detecting said congestion situation as absent when the overall allocated capacity on the channel resource (PDCH) is less than or, equal to, the maximum channel resource (PDCH) capacity per unit of time.

8. The method of any of the previous claims, **characterised in that** providing said services to the users of the network involves establishing a logical connection between a user terminal (MS) requesting service and a Base Station System (BSS) providing services, said logical connection being in the form of at least one Temporary Block Flow (TBF; TBF 1, TBF 2) to support transfer of data.

9. The method of claim 8, **characterised in that** it includes the step of maintaining said Temporary Block Flow (TBF, TBF 1, TBF 2) only for the duration of said transfer of data.

10. The method of either of claims 8 or 9, **characterised in that** it includes the step of establishing more than one Temporary Block Flow (TBF 1, TBF 2) according to a multiple TBF (mTBF) scheme.

11. A system for assigning priorities of service to users in a communication network, the system being configured for assigning said priorities on the basis of the method of any of claims 1 to 10.

12. A computer program product, directly loadable in the memory of at least one computer and including software code portions for performing the method of any of claims 1 to 10.
